(19) **Europäisches Patentamt European Patent Office Office européen des brevets**

(11) **EP 2 702 190 B1**

(12) **FASCICULE DE BREVET EUROPEEN**

(45) Date de publication et mention de la délivrance du brevet:
**27.05.2015 Bulletin 2015/22**

(21) Numéro de dépôt: **12714335.2**

(22) Date de dépôt: **18.04.2012**

(51) Int Cl.:
*C25D 3/50* (2006.01)       *C25D 3/52* (2006.01)
*H01M 4/88* (2006.01)       *H01M 4/92* (2006.01)
*H01M 8/10* (2006.01)

(86) Numéro de dépôt international:
**PCT/EP2012/057087**

(87) Numéro de publication internationale:
**WO 2012/146520 (01.11.2012 Gazette 2012/44)**

(54) **PROCÉDÉ DE CROISSANCE DE PARTICULES MÉTALLIQUES PAR ÉLECTRODÉPOSITION AVEC INHIBITION IN SITU**

VERFAHREN ZUM WACHSTUM VON METALLISCHEN PARTIKELN MITTELS GALVANISIEREN MIT IN SITU INHIBITIONSPHASE

PROCESS OF GROWTH OF METALLIC PARTICLES BY ELECTRODEPOSITION WITH IN SITU INHIBITION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.04.2011 FR 1153606**

(43) Date de publication de la demande:
**05.03.2014 Bulletin 2014/10**

(73) Titulaires:
• **Commissariat à l'Énergie Atomique et aux Énergies Alternatives
75015 Paris (FR)**
• **King Saud University
11451 Riyadh (SA)**

(72) Inventeurs:
• **FOUDA-ONANA, Frédéric
Le Moule 97160 (GP)**
• **GUILLET, Nicolas
F-26300 Chatuzange Le Goubet (FR)**

(74) Mandataire: **Esselin, Sophie et al
Marks & Clerk France
Conseils en Propriété Industrielle
Immeuble Visium
22, Avenue Aristide Briand
94117 Arcueil Cedex (FR)**

(56) Documents cités:
**WO-A2-2007/110246       US-A- 4 183 790
US-A1- 2006 040 157       US-A1- 2008 251 390
US-A1- 2009 202 871**

**EP 2 702 190 B1**

## EP 2 702 190 B1

**Description**

Le domaine de l'invention est celui des procédés de dépôt de particules métalliques par voie électrochimique, notamment utilisés pour la formation d'électrodes pour piles à combustibles ou pour tout type d'électrode utilisée dans la plupart des réactions électrochimiques (électrosynthèse, l'électrolyse de l'eau, capteurs électrochimiques, supercapacités...), dont la surface active d'électrode doit être importante.

L'un des freins au développement des piles à combustible basse température à membrane échangeuse de protons (PEMFC) réside dans la nécessité d'utiliser des matériaux suffisamment actifs pour catalyser les réactions de réduction de l'oxygène (RRO) et d'oxydation de l'hydrogène (ROH).

Actuellement, le meilleur catalyseur qui a été trouvé pour ces deux réactions est le platine et certains de ses alliages avec des métaux de transition (Ru, Ni, Co...). Pour obtenir des performances optimales dans des conditions de fonctionnement compatibles avec des applications usuelles, il est actuellement nécessaire de charger les électrodes avec des quantités relativement importantes de métal noble (0.1 - 0.3 mg/cm$^2$).

Le coût du seul métal noble utilisé dans les piles à combustible est actuellement estimé à 50% du coût de l'empilement et entre 20 à 25 % du coût total du système pile à combustible.

Par conséquent, la réduction de la quantité de platine, tout en maintenant des performances constantes pour les piles est un enjeu majeur de recherche et développement sur les catalyseurs pour la cathode de pile à combustible. Face à ce problème, l'une des stratégies consiste à ne localiser le platine que dans les zones où son activité sera maximale. Puisque les réactions électrochimiques concernées font intervenir à la fois les gaz réactifs, des électrons et des protons, ces zones présentent au moins un contact ionique et un contact électrique. Pour qu'un site catalytique soit pleinement efficace, il faut qu'il soit également accessible au gaz réactif (hydrogène ou oxygène). Une des options permettant de répondre à ces deux critères consiste à utiliser un dépôt électrochimique également appelé électrodéposition. La méthode consiste à appliquer un signal galvanique ou à potentiel contrôlé afin de réduire le sel métallique (platine sous forme ionique $PtCl_6^{2-}$ par exemple) en particules métalliques déposées sur l'électrode qui sert de substrat pour le dépôt.

La réaction bilan du dépôt de platine s'écrit :

$$2H^+, PtCl_6^{2-} + 4e^- \rightarrow Pt + 2HCl + 4Cl^-$$

Bien que la technique soit utilisée depuis de nombreuses années, comme en témoignent les travaux décrits dans Vilimbi N.R.K., Anderson E.B., and Taylor E.J. U.S. Patent. [5084144], ou dans : E. J. Taylor, E. B. Anderson, N. R. K. Vilambi, Journal of the Electrochemical Society 1992, 139 L45-L46., la méthode n'a cessé d'être étudiée pour améliorer les performances de ces électrodes préparées par électrodéposition. Parmi les travaux majeurs sur le sujet, on peut citer les articles suivants : S. M. Ayyadurai, Y. S. Choi, P. Ganesan, S. P. Kumaraguru, B. N. Popov, Journal of the Electrochemical Society 2007, 154 B1063-B1073, H. Kim, B. N. Popov, Etectrochemical and Solid State Letters 2004, 7 A71-A74, dans lesquels les électrodes chargées à 0,32 mg$_{Pt}$/cm$^2$ ont permis d'atteindre une densité de courant de 900 mA/cm$^2$ à 700 mV en faisant fonctionner la pile avec H$_2$ - O$_2$ à 80 °C sous pression atmosphérique.

Cependant dans bien des cas, il apparaît que la taille des particules de ces électrodes est au mieux 10 fois plus grosse que celles préparées par méthode chimique classique. Ce phénomène est très préjudiciable pour l'activité catalytique car les réactions mises en jeu sont des réactions qui se produisent à la surface des particules métalliques et à chargement constant, la surface développée de ces particules est d'autant plus faible que le diamètre des particules est grand. Il existe donc un risque de perdre le gain d'efficacité lié à la localisation optimale des particules si celles-ci deviennent trop grosses.

L'un des objectifs majeurs dans l'optimisation de la technique d'électrodéposition est donc de parvenir à réduire la taille des particules à des diamètres comparables à ceux obtenus par synthèse chimique ou physique, c'est-à-dire inférieur à 10 nm. Certes, on trouve dans l'état de l'art, des travaux ayant préparé des électrodes par électrodéposition avec des particules dont la taille est de l'ordre de quelques nanomètres, cependant dans bien des cas, le chargement est très faible et ne permet d'être utilisé comme cathode de pile à combustible (un chargement de l'ordre de 150 à 200 μg$_{Pt}$/cm$^2$ est nécessaire pour un fonctionnement optimal). Une autre méthode permettant de réduire la taille des particules consiste à ajouter un agent visqueux dans le bain électrolytique afin de freiner la diffusion des ions métalliques ce qui permet de réduire significativement la taille des particules (de 5 à 30 nm) comme décrit dans les articles : Ayyadurai, Y. S. Choi, P. Ganesan, S. P. Kumaraguru, B. N. Popov, Journal of the Electrochemical Society 2007, 154 B1063-B1073 ou W. Zhu, D. Ku, J. P. Zheng, Z. Liang, B. Wang, C. Zhang, S. Walsh, G. Au, E. J. Plichta, Electrochimica Acta 2010, 55 2555-2560.

Cette alternative donne des résultats très intéressants mais pose le problème du nettoyage des électrodes de ces agents visqueux (glycerol ou l'éthylène glycol). En effet, leur présence en concentration élevée dans la couche de diffusion de l'électrode freine non seulement la diffusion des ions Pt pendant l'électrodéposition mais également l'accès de l'oxygène jusqu'aux sites actifs et donc contribue à diminuer de façon importante les performances de la pile.

C'est pourquoi dans ce contexte, la présente invention a pour objet une solution originale pour limiter la taille des particules métalliques. Elle consiste à utiliser une espèce chimique ayant la propriété de s'adsorber facilement et fortement au métal afin de limiter la croissance des particules et de favoriser les phases de germination lors de l'électrodéposition. De plus cette espèce chimique adsorbée à la surface du métal doit pouvoir être facilement désorbée (par oxydation électrochimique par exemple).

Plus précisément, la présente invention a pour objet un procédé de fabrication d'une électrode conductrice électronique et catalytique à base de particules métalliques, comprenant une étape d'électrodéposition d'un sel métallique pour former lesdites particules métalliques à la surface d'une électrode, caractérisé en ce que :

- le métal étant du platine ;
- l'étape d'électrodéposition du sel métallique est effectuée en présence d'espèce chimique bloquante présentant un fort pouvoir d'absorption à la surface desdites particules métalliques et ayant un potentiel d'oxydation plus élevé que le potentiel de réduction dudit sel métallique :

  • ladite espèce bloquante étant du $SO_2$ ou une espèce nitrée telle que $NO_2^-$, $NO_2$, $NO_3$ ou un composé soufré tel que $H_2S$ ou du $CO$ ou du propane
  • de manière à ce que l'espèce chimique bloquante conserve son pouvoir bloquant durant la réaction de réduction dudit sel métallique et
  • de manière à réduire la taille des particules métalliques formées et constitutives de ladite électrode conductrice électronique et catalytique ;

- une étape de désorption de l'espèce chimique bloquante.

Le fort pouvoir d'absorption peut être caractérisé par l'absence de pics sur le voltammogramme i versus la tension appliquée E du Pt, l'absence de ces pics sur le voltammogramme traduisant le blocage des sites d'adsorption du platine par une autre espèce, le terme voltammogramme couramment utilisé correspondant au terme voltampérogramme.

Il est rappelé que la voltammétrie est une méthode d'électroanalyse basée sur la mesure du flux de courant résultant de la réduction ou de l'oxydation des composés présents en solution sous l'effet d'une variation contrôlée de la différence de potentiel entre deux électrodes spécifiques. Elle permet d'identifier et de mesurer quantitativement un grand nombre de composés et également d'étudier les réactions chimiques incluant ces composés.

Selon une variante de l'invention, le dépôt électrolytique est effectué en présence :

- d'une solution acide de $H_2PtCl_6$ ;
- d'acide sulfurique ;
- de $Na_2SO_3$.

Selon une variante de l'invention, l'opération de désorption de l'espèce chimique boquante est réalisée par oxydation de ladite espèce.

Selon une variante de l'invention, l'étape d'oxydation est effectuée par application d'un potentiel suffisamment élevé par rapport au potentiel d'équilibre du métal à déposer, typiquement supérieur à environ 0.76 $V_{ERH}$. En effet, dans ce cas où le Pt est déposé à partir du sel d'acide platinique dont le potentiel d'équilibre est :

Eeq PtCl62- / Pt = 0,76 $V_{ERH}$ ; la condition sur le choix de l'espèce bloquante est que son potentiel d'oxydation soit supérieur à 0.76 $V_{ERH}$.

Selon une variante de l'invention, l'étape d'oxydation est effectuée par balayage voltampérométrique dans une solution d'acide.

Selon une variante de l'invention, l'étape d'oxydation est effectuée par traitement thermique.

Selon une variante de l'invention, l'étape de dépôt électrolytique est effectuée sur une électrode poreuse.

Selon une variante de l'invention, le procédé comprend en outre le dépôt d'une couche microporeuse à la surface de l'électrode poreuse.

Selon une variante de l'invention, le procédé comprend la réalisation d'une surface hydrophile au niveau de l'électrode, préalablement au dépôt électrolytique.

Selon une variante de l'invention, la surface est rendue hydrophile par dépôt d'une encre à base de noir de carbone, de glycerol et une suspension de Nafion dans l'ispopropanol.

Ainsi avec le procédé de l'invention, il est possible de réduire la taille des particules lors la préparation d'électrode et notamment d'électrode pour pile à combustible. Le procédé utilise une espèce chimique connue pour ses bonnes propriétés d'adsorption sur le métal après avoir formé des premiers germes par électrodéposition. Ces germes deviennent des sites moins favorables pour la croissance et favorisent la formation de nouvelles particules métalliques.

Le procédé de l'invention présente ainsi notamment les avantages suivants :

- la taille des particules, puisque celle-ci est en théorie indépendante du chargement en métal puisque seuls la quantité et le pouvoir adsorbant de l'espèce inhibitrice de croissance devant en principe avoir une influence sur la taille des particules ;
- la possibilité de pouvoir éliminer facilement l'espèce bloquante notamment par simple oxydation, et ce en observant in situ si la surface de l'électrode est totalement vierge de gaz bloquant en suivant l'augmentation de la surface correspondant à un zone caractéristique entre 0.05 V et 0.3 $V_{ERH}$ sur la signature électrochimique d'une électrode de Pt représentant l'adsorption et la désorption de l'hydrogène sur le Pt. L'absence de ces pics sur le voltammogramme i versus E traduit le blocage des sites d'adsorption par une autre espèce, du platine cycle après cycle ;
- dans le cadre de pile à combustible et contrairement à ce qui se fait dans l'état de l'art où l'utilisation de liquide visqueux peut drastiquement affecter les effets catalytiques, la possibilité d'accéder aux sites qui sont aussi mis en jeu pour la réduction de l'oxygène, grâce à l'utilisation d'une espèce gazeuse.

L'invention sera mieux comprise et d'autres avantages apparaîtront à la lecture de la description qui va suivre donnée à titre non limitatif et grâce aux figures annexées parmi lesquelles :

- la figure 1 illustre les courbes de voltammétrie d'une solution de $H_2PtCl_6$ sans agent bloquant et le voltammogramme du Pt dans une solution de $H_2SO_4$ 0.5M avec agent bloquant ($SO_2$) ;
- Les figures 2a, 2b, 2c et 2d illustrent les différentes étapes d'un exemple de procédé de l'invention ;
- la figure 3 illustre la courbe de tension mesurée en fonction du temps, en regard d'un signal pulsé appliqué ;
- la figure 4 illustre l'effet de l'oxydation de $SO_2$ sur la réponse électrochimique du Platine ;
- la figure 5 illustre la taille des particules de Pt obtenues sans et avec espèce chimique bloquante de $SO_2$ dans le bain électrolytique ;
- la figure 6 illustre la comparaison des courbes de voltammétrie des électrodes obtenues par électrodéposition avec et sans espèce chimique bloquante de $SO_2$.

De manière générale, le procédé de l'invention nécessite le choix des potentiels entre l'espèce à déposer et l'espèce chimique bloquante. Le métal à déposer doit avoir un potentiel de réduction plus faible que le potentiel d'oxydation de l'espèce chimique bloquante. Comparativement au $SO_2$, d'autre gaz peuvent être susceptibles de jouer ce rôle dans le cas du Platine.

Parmi ceux-ci, on peut citer notamment les espèces nitrées telles que: $NO_2^-$ , $NO_2$, $NO_3^-$ qui s'oxydent à des potentiels supérieurs à 0.9$V_{ERH}$, comme décrit dans l'article de Jean St-Pierre, Nengyou Jia, Reza Rahmani, Journal of The Electrochemical Society, 2008, 155, 4, B315-B32.

De la même façon, les composés soufrés tel que le sulfure d'hydrogène ($H_2S$) dont le potentiel d'oxydation est supérieur à 0.8$V_{ERH}$ comme présenté dans l'article : R. Mohtadi, W.-k. Lee, S. Cowan, J. W. Van Zee, Mahesh Murthy, Etectrochemical and Solid-State Letters, 2003, 6, 12, A272-A274, peuvent également constituer une alternative pour la dispersion des particules de platine pendant l'électrodéposition.

Le Demandeur spécifie que le dioxyde de soufre ($SO_2$) est connu pour s'adsorber de manière irréversible à température ambiante sur le platine avec un taux de recouvrement des sites d'adsorption du platine proche de 1, comme décrit dans les articles de : Yannick Garsany et al. "Impact of Sulfur Dioxide on the Performance of the PEMFC Cathodes " ECS Transactions, 3 (1) 685-694 (2006) DOI: 10.1149/1.2356189] ou de Jeremy J. Pietron et al "Impact of sulfur dioxide on the performance of PEMFC cathode" ECS Transactions, 1 (8) 103-109 (2006); DOI:10.1149/1.2214547 ou de J. Fu et al. / Journal of Power Sources 187 (2009) 32-38.

De même, il est connu que le sulfure d'hydrogène ($H_2S$) est également un composé qui s'adsorbe de manière irréversible à la surface du platine et bloque ainsi les mécanismes réactionnels à la surface de ce dernier. Ainsi, les constantes cinétiques d'adsorption du $H_2S$ pour le platine ($kP_{H2S}$) mesurées à 50°C sont de l'ordre de 0,0025 min⁻¹ avec une énergie d'activation de l'ordre de 28 kJ mol⁻¹ comme décrit dans l'article de R. Mohtadi et al. / Applied Catalysis B: Environmental 56 (2005) 37-42]. Le $H_2S$ adsorbé est oxydé au-delà de 0,98 V à 50 °C.

Il est également connu que les oxydes d'azote $NO_2^-$, $NO_2$, $NO_3^-$ sont également potentiellement intéressants, s'oxydant à des potentiels élevés comme décrit dans l'article de Jean Sait-Pierre et al. « PEMFC Contamination Model: Compétitive Adsorption Demonstrated with NO2" Journal of The Electrochemical Society, 155 4 B315-B320 (2008).

Les travaux de J.M. Moore et al.sur les principaux polluants des piles à combustible , décrits dans J.M. Moore et al. "The effects of battlefield contaminants on PEMFC performance" Journal of Power Sources 85 2000 254-260, permettent de donner une idée des composés polluants qui peuvent être utilisés :

- le CO permet un blocage quasi complet (96%) des sites d'adsorption du platine avec 20 ppm dans l'air ;
- pour les oxydes d'azote, une immobilisation de la totalité des sites d'adsorption est obtenue avec seulement 400 ppb ;
- pour le dioxyde de soufre, 500 ppb sont nécessaires pour obtenir le même résultat ;
- le propane peut également présenter un intérêt avec un blocage complet des sites avec 90 ppm.

Table 2

Summary of the effect of the contaminants on fuel cell output

| Contaminant | Concentration | Percentage of original output during challenge | | Percentage of original output during recovery |
|---|---|---|---|---|
| Carbon monoxide | 20 ppm | 96% | | 100% |
| Nitrogen dioxide | 400 ppb | 100% | | 100% |
| Sulphur dioxide | 500 ppb | 100% | | 100% |
| Benzene | 50 ppm | 95% | (50 mA/cm$^2$) | 95% |
| | | 93% | (100 mA/cm$^2$) | |
| | | 72% | (200 mA/cm$^2$) | |
| Propane | 90 ppm | 100% | | 100% |
| HCN | 1780 ppm | 13% | | 45% |
| HCN | 3560 ppm | 9% | | 35% |
| CNCl | 780 ppm | 11% | | 32% |
| CNCl | 1560 ppm | 12% | | 50% |
| Sulphur mustard | 15 ppm | 13% | | 13% |
| Sarin | 170 ppm | 30% | | 30% |
| Sarin | 340 ppm | 23% | | 23% |

En fonction des espèces chimique bloquantes choisies, les sites bloqués et les sites de croissance peuvent être différents, ce qui peut conduire à des particules de formes différentes. Il devient ainsi possible d'améliorer la distribution et de contrôler la taille des particules métalliques pour une application catalytique désirée en fonction de l'espèce chimique bloquante.

Il est par ailleurs à noter que si le CO n'est pas adéquat pour le platine, il peut s'avérer intéressant pour d'autres métaux tels que le cuivre, le nickel ou l'étain entre autre, qui présentent des potentiels de réduction inférieur à 0.7 $V_{ERH}$.

Exemple de mise en oeuvre du procédé de l'invention :

Le dépôt électrochimique se fait dans une cellule d'électrodéposition sur un support en carbone poreux tel que les couches de diffusion commerciales (GDL « Gas Diffusion Layer » SGL de Sigracet™). La cellule d'électrodéposition comprend une contre électrode en mousse de Tantale espacée de 1 cm de l'électrode de travail sur laquelle s'effectue le dépôt.

Une électrode Ag/AgCl est utilisée comme électrode de référence. Le bain électrolytique est composé d'une solution d'acide platinique $H_2PtCl_6$ à 20 mM diluée dans l'acide sulfurique 0,5 M. 3.75 g de $Na_2SO_3$ sont rajoutés dans le bain électrolytique de façon à obtenir une solution saturée en $SO_2$ selon la réaction suivante :

$$\left(2H^+, SO_4^{2-}\right) + 2Na^+, SO_3^{2-} \rightarrow SO_2 + Na_2SO_4 + H_2O$$

L'originalité du procédé réside dans le choix de l'espèce chimique bloquante inhibitrice. En effet en plus d'être facilement oxydable afin de pouvoir nettoyer efficacement les particules métalliques, le potentiel d'oxydation de ce gaz doit être strictement supérieur au potentiel de réduction des ions $PtCl_6^{2-}$ en Pt. Si cette condition n'est pas respectée, il est probable que le gaz inhibiteur s'oxyde avant que la réduction des ions platine ne commence, dans ce cas l'effet bloquant du gaz n'a plus lieu.

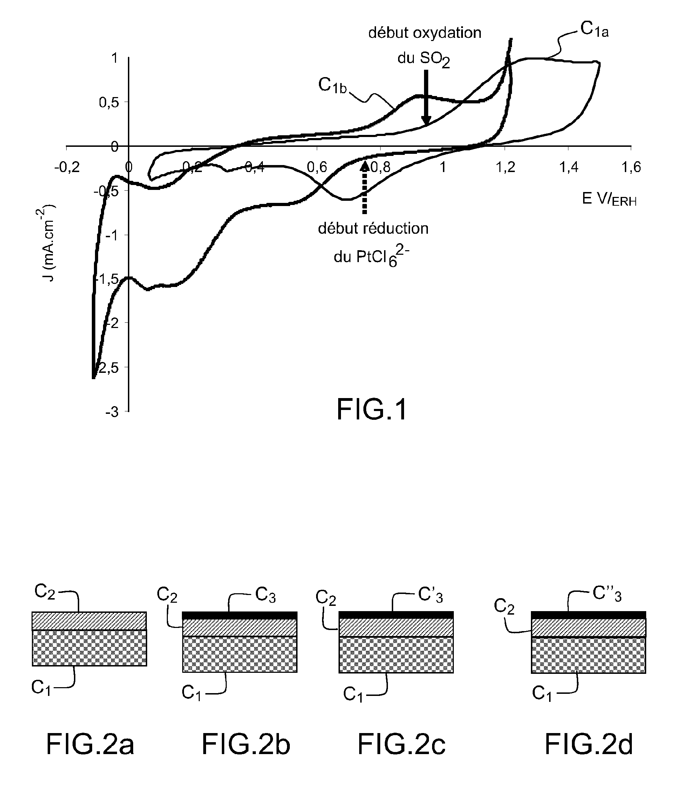

La figure 1 illustre la pertinence du choix du dioxyde de soufre dans ce procédé. En effet, on voit clairement que le potentiel d'oxydation du $SO_2$ en $SO_4^{2-}$ s'effectue à 1 $V_{ERH}$ (le sigle ERH désignant une électrode de référence), comme le montre la courbe $C_{1a}$, ce qui est bien largement plus élevé que le potentiel de réduction des ions de Pt (courbe $C_{1a}$), en présence de la réaction suivante : $SO_2 + 2H_2O \rightarrow SO_4^{2-} + 4H^+ + 2e^-$

La courbe $C_{1b}$ montre quant à elle l'évolution de la mesure par voltammétrie dans une solution de 20mM de $H_2PtCl_6$, en l'absence d'espèce $SO_2$.

Par conséquent l'effet polluant du $SO_2$ n'est pas affecté pendant la réduction des ions platine.

A titre illustratif, les différentes étapes d'un exemple de procédé de l'invention sont schématisées en figure 2a, 2b, 2c et 2d.

A partir d'une électrode pouvant être une couche de diffusion $C_1$ en carbone poreux, on procède au dépôt d'une couche microporeuse $C_2$ de porosité adaptée à l'application envisagée, dans cet exemple celui de la pile à combustible. Cette couche microporeuse peut typiquement comprendre un liant et de la poudre de carbone mais présente l'inconvénient d'être hydrophobe. On procède alors à un traitement de surface pour rendre cette dernière, hydrophile avec un dépôt de couche $C_3$ de type encre comme illustré en figure 2a.

A cet effet, une première couche de diffusion $C_1$ pouvant être une couche de diffusion commerciale SGL de 25 $cm^2$ est traitée pour rendre la surface hydrophile. Ce traitement consiste à pulvériser comme illustré en figure 2b, une encre $C_3$ dont le ratio massique des différents constituants est comme suit : 1 / 0.5 / 45 / 1 pour le noir de carbone (CB), Nafion, isopropanol, et Glycerol respectivement. Ce dépôt est ensuite placé en étuve pour évaporation complète des solvants à 80 °C pendant 30 min.

On procède alors au dépôt de Pt par voie électrochimique comme illustré en figure 2c, formant un couche $C'_3$ de particules de Pt.

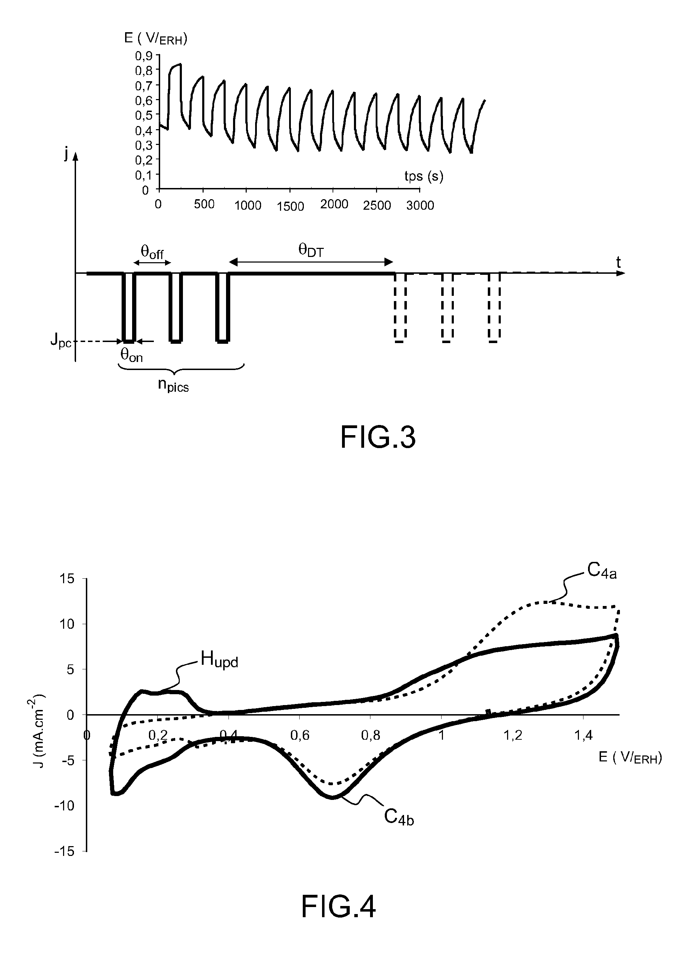

Le dépôt est effectué, dans le bain électrolytique décrit précédemment en contrôlant le courant avec un signal pulsé comme tel que celui illustré en figure 3.

Le signal consiste en l'application d'un courant dit pulsé dont les paramètres sont les suivants :

$j_{pc}$ est le courant appliqué pendant le pulse : 100 mA/$cm^2$

$\theta_{on}$ est la durée du pulse et vaut : 10ms

$\theta_{off}$ est le temps entre deux pulses : 180ms

$n_{pics}$ es le nombre de pulses dans cet exemple is est de 24

Une fois le nombre de pics atteint, le signal est arrêté pour permettre au système de revenir à un état d'équilibre. Pendant cette période de relaxation, la concentration de $PtCl_6^{2-}$ retrouve une valeur non nulle au voisinage de l'électrode. Ce temps de relaxation noté $\theta_{DT}$ est de 45s.

La répétition de ces signaux notée $n_{boucles}$ (signal pulsé + temps de relaxation) est de 10.

La figure 3a est une représentation du signal pulsé suivi du temps de relaxation. La réponse en tension à ce signal galvanique est représentée à la figure 3b où chaque chute en tension correspond au signal (courant pulsé) et chaque saut en tension correspond au moment où le signal pulsé est arrêté (temps de relaxation).

Les valeurs des différents paramètres sont dictées après une analyse paramétrique et également en fonction de la loi de Faraday.

$$q = \frac{Q}{S} = \left( \frac{i}{S} \times \vartheta_{on} \times n_{pics} \right) \times n_{boucles} = \left( j \times \vartheta_{on} \times n_{pics} \right) \times n_{boucles} = 0.24 \, C/cm^2$$

Afin de réduire la taille des particules, le signal de dépôt peut être appliqué deux fois, en pulvérisant 1 ml d'encre hydrophile entre deux dépôts.

Cela conduit donc à l'utilisation d'une charge de 0.48 C/$cm^2$ ce qui conduit à un chargement en platine théorique de 0.24 $mg_{Pt}$/$cm^2$.

Compte tenu de la saturation de l'électrolyte en $SO_2$ au fur et à mesure que le dépôt de Pt se forme à la surface de la couche de diffusion, le dioxyde de soufre connu pour son pouvoir adsorbant sur le platine se fixe sur les particules métalliques ainsi formées, conduisant à la formation d'une couche $C_3'$. Ceci force une plus grande distribution des particules de platine car la croissance de Pt est bloquée à la surface des germes de platine entièrement recouvert de $SO_2$.

Cette propriété d'inhibition du $SO_2$ défavorable pour la catalyse de la réduction de l'oxygène devient un avantage pour une meilleure distribution des particules métalliques préparées par électrodéposition.

Une fois le dépôt fini, il s'agit d'oxyder le $SO_2$ pour retrouver toute la surface de Pt disponible afin d'obtenir la plus grande surface catalytique possible, et former la couche modifiée $C_3''$ comme illustré en figure 2d.

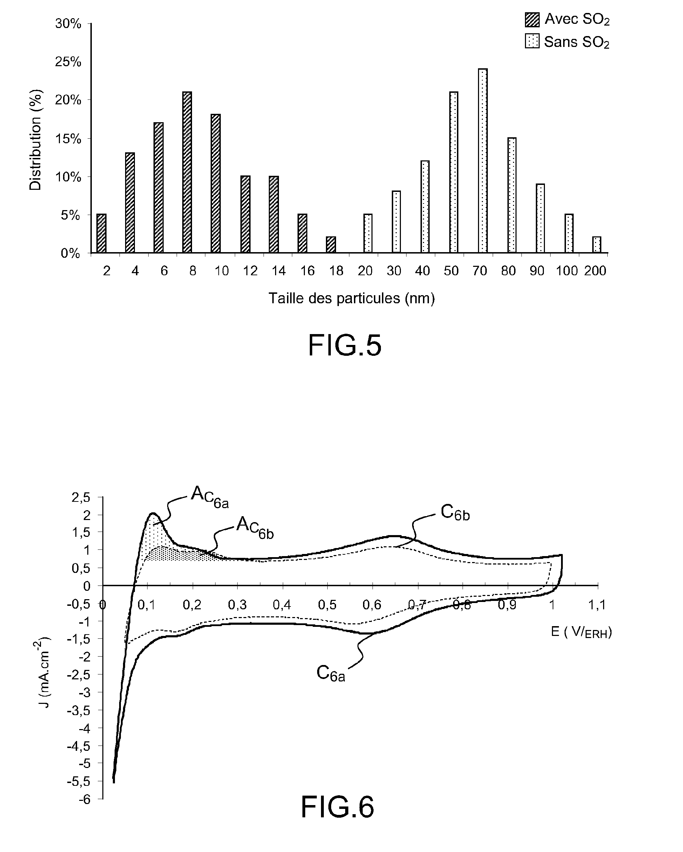

L'oxydation du $SO_2$ se fait par simple balayage voltampérométrique à 20 mV/s entre -50 $mV_{ERH}$ et 1400 $mV_{ERH}$ dans une solution d'acide sulfurique à 0.5 M saturé en gaz inerte tel que l'azote. Après quelques cycles, le signal i versus E, devient stable et la signature électrochimique du Pt est clairement observable. On peut alors considérer que le dioxyde de soufre est totalement oxydé en sulfate dans la solution de $H_2SO_4$ 0.5M comme le montre la figure 4. La présence de particules de Pt à la surface de couche de diffusion permet d'obtenir une électrode qui devra ensuite subir un traitement thermique afin d'éliminer les traces de glycérol présentes dans la couche active. La courbe $C_{4a}$ est relative à un premier cycle, la figure $C_{4b}$ est relative à un dernier cycle permettant d'éliminer complètement le $SO_2$ préalablement adsorbé, montrant ainsi que in situ si la surface de l'électrode est totalement vierge de gaz bloquant on peut suivre l'augmentation de la surface $H_{upd}$ correspondant à un zone caractéristique entre 0.05 V et 0.3 $V_{ERH}$ sur la signature électrochimique d'une électrode de Pt représentant l'adsorption et la désorption de l'hydrogène sur le Pt. L'absence de ces pics sur le voltammogramme i versus E traduit le blocage des sites d'adsorption par une autre espèce, du platine cycle après cycleComme le montre la figure 5, en comparant un procédé de dépôt avec et sans présence d'espèce chimique bloquante de $SO_2$, on observe une réduction de la taille moyenne des particules d'un facteur 8. En conséquence à chargement équivalent (le chargement étant estimé à partir de la loi de Faraday, on suppose que dans les mêmes conditions à même charge en coulomb on obtient le même chargement en Pt), mais avec des tailles de particules plus petites, la surface active (zone grisée) se trouve plus grande comme on peut l'observer à la figure 6. La courbe $C_{6a}$ est relative à un dépôt effectué avec espèce bloquante, la courbe $C_{6b}$ est relative à un dépôt effectué sans espèce bloquante. Les aires $A_{C6a}$ et $A_{C6b}$ sont représentatives des tailles des particules de métal formé ainsi pour une abscisse donnée, plus l'aire est élevée et plus la taille des particules est faible.

**Revendications**

1. Procédé de fabrication d'une électrode conductrice électronique et catalytique à base de particules métalliques, comprenant une étape d'électrodéposition d'un sel métallique pour former lesdites particules métalliques à la surface d'une électrode, **caractérisé en ce que** :

   - le métal étant du platine ;
   - l'étape d'électrodéposition du sel métallique est effectuée en présence d'espèce chimique bloquante présentant un fort pouvoir d'absorption à la surface desdites particules métalliques et ayant un potentiel d'oxydation plus élevé que le potentiel de réduction dudit sel métallique :

      • ladite espèce bloquante étant du $SO_2$ ou une espèce nitrée telle que $NO_2^-$, $NO_2$, $NO_3$ ou un composé soufré tel que $H_2S$ ou du CO ou du propane ;
      • de manière à ce que l'espèce chimique bloquante conserve son pouvoir bloquant durant la réaction de réduction dudit sel métallique et
      • de manière à réduire la taille des particules métalliques formées et constitutives de ladite électrode conductrice électronique et catalytique ;

   - une étape de désorption de l'espèce chimique bloquante.

2. Procédé de fabrication d'une électrode conductrice électronique et catalytique à base de particules métalliques selon la revendication 1, **caractérisé en ce que** le dépôt électrolytique est effectué en présence :

   - d'une solution acide de $H_2PtCl_6$;
   - d'acide sulfurique ;
   - de $Na_2SO_3$.

3. Procédé de fabrication d'une électrode conductrice électronique et catalytique à base de particules métalliques selon l'une des revendications 1 à 2, **caractérisé en ce que** l'opération de nettoyage de l'espèce chimique bloquante est réalisée par oxydation de ladite espèce.

4. Procédé de fabrication d'une électrode conductrice catalytique à base de particules métalliques selon la revendication 3, **caractérisé en ce que** l'étape d'oxydation est effectuée par application d'un potentiel suffisamment élevé supérieur à environ 0.76 $V_{ERH}$.

5. Procédé de fabrication d'une électrode conductrice électronique et catalytique selon la revendication 4, **caractérisé en ce que** l'étape d'oxydation est effectuée par balayage voltampérométrique dans une solution d'acide.

6. Procédé de fabrication d'une électrode conductrice catalytique à base de particules métalliques selon la revendication 3, **caractérisé en ce que** l'étape d'oxydation est effectuée par traitement thermique.

7. Procédé de fabrication d'une électrode conductrice électronique et catalytique selon l'une des revendications précédentes, **caractérisé en ce que** l'étape de dépôt électrolytique est effectuée sur une électrode poreuse.

**8.** Procédé de fabrication d'une électrode conductrice électronique et catalytique selon la revendication 7, **caractérisé en ce qu'**il comprend en outre le dépôt d'une couche microporeuse à la surface de l'électrode poreuse.

**9.** Procédé de fabrication d'une électrode conductrice électronique et catalytique selon l'une des revendications 7 ou 8, **caractérisé en ce qu'**il comprend la réalisation d'une surface hydrophile au niveau de l'électrode, préalablement au dépôt électrolytique.

**10.** Procédé de fabrication d'une électrode conductrice électronique et catalytique selon la revendication 9, **caractérisé en ce que** la surface est rendue hydrophile par dépôt d'une encre à base de noir de carbone et d'alcool.


**Patentansprüche**

**1.** Verfahren zur Herstellung einer leitenden elektronischen und katalytischen Elektrode auf der Basis von Metallpartikeln, das einen Schritt des elektronischen Abscheidens eines metallischen Salzes zum Bilden der metallischen Partikel auf der Oberfläche einer Elektrode beinhaltet, **dadurch gekennzeichnet, dass**:

- das Metall Platin ist;
- der Schritt des elektronischen Abscheidens des metallischen Salzes in Anwesenheit einer chemischen Sperrspezies erfolgt, die eine starke Absorptionskraft auf der Oberfläche der metallischen Partikel präsentiert und ein Oxidationspotential hat, das höher ist als das Reduktionspotential des metallischen Salzes;

• wobei die Sperrspezies $SO_2$ oder eine stickstoffhaltige Spezies wie $NO_2^-$, $NO_2$, $NO_3$ oder eine schwefelhaltige Verbindung wie $H_2S$ oder CO oder Propan ist;
• so dass die chemische Sperrspezies ihre Sperrfähigkeit während der Reduktionsreaktion des metallischen Salzes beibehält, und
• so dass die Größe der gebildeten und die elektronische und katalytische leitende Elektrode konstituierenden Metallpartikel reduziert wird;

- einen Schritt der Desorption der chemischen Sperrspezies.

**2.** Verfahren zur Herstellung einer leitenden elektronischen und katalytischen Elektrode auf der Basis von Metallpartikeln nach Anspruch 1, **dadurch gekennzeichnet, dass** die elektrolytische Abscheidung in Anwesenheit der folgenden Elemente erfolgt:

- einer Säurelösung von $H_2PtCl_6$;
- Schwefelsäure;
- $Na_2SO_3$.

**3.** Verfahren zur Herstellung einer leitenden elektronischen und katalytischen Elektrode auf der Basis von Metallpartikeln nach einem der Ansprüche 1 bis 2, **dadurch gekennzeichnet, dass** der Vorgang des Reinigens der chemischen Sperrspezies durch Oxidation der Spezies erfolgt.

**4.** Verfahren zur Herstellung einer leitenden katalytischen Elektrode auf der Basis von Metallpartikeln nach 3, **dadurch gekennzeichnet, dass** der Oxidationsschritt durch Anlegen eines ausreichend hohen Potentials von mehr als etwa 0,76 $V_{ERH}$ erfolgt.

**5.** Verfahren zur Herstellung einer leitenden elektronischen und katalytischen Elektrode nach Anspruch 4, **dadurch gekennzeichnet, dass** der Oxidationsschritt durch voltamperometrische Abtastung in einer Säurelösung erfolgt.

**6.** Verfahren zur Herstellung einer leitenden katalytischen Elektrode auf der Basis von Metallpartikeln nach Anspruch 3, **dadurch gekennzeichnet, dass** der Oxidationsschritt durch thermische Bearbeitung erfolgt.

**7.** Verfahren zur Herstellung einer leitenden elektronischen und katalytischen Elektrode nach einem der vorherigen Ansprüche, **dadurch gekennzeichnet, dass** der Schritt des elektrolytischen Abscheidens auf einer porösen Elektrode erfolgt.

**8.** Verfahren zur Herstellung einer leitenden elektronischen und katalytischen Elektrode nach Anspruch 7, **dadurch**

**gekennzeichnet, dass** es ferner das Abscheiden einer mikroporösen Schicht auf der Oberfläche der porösen Elektrode beinhaltet.

9. Verfahren zur Herstellung einer leitenden elektronischen und katalytischen Elektrode nach Anspruch 7 oder 8, **dadurch gekennzeichnet, dass** es die Realisierung einer hydrophilen Oberfläche an der Elektrode vor dem elektrolytischen Abscheiden beinhaltet.

10. Verfahren zur Herstellung einer leitenden elektronischen und katalytischen Elektrode nach Anspruch 9, **dadurch gekennzeichnet, dass** die Oberfläche durch Abscheiden einer Tinte auf Ruß- und Alkoholbasis hydrophil gemacht wird.

**Claims**

1. Method for producing an electronic and catalytic conductive electrode based on metal particles, comprising a step of electrodepositing a metal salt in order to form metal particles on the surface of an electrode, **characterised in that**:

   - the metal is platinum;
   - the step of electrodepositing the metal salt is carried out in the presence of a blocking chemical species which has a high absorption power at the surface of the metal particles and which has a higher oxidation potential than the reduction potential of the metal salt:

      • the blocking species being $SO_2$ or a nitrogen-containing species such as $NO_2^-$, $NO_2$, $NO_3$ or a sulphur-containing compound such as $H_2S$ or CO or propane;
      • so that the blocking chemical species retains its blocking power during the reduction reaction of the metal salt, and
      • in order to reduce the size of the metal particles which are formed and which constitute the electronic and catalytic conductive electrode;

   - a step of desorption of the blocking chemical species.

2. Method for producing an electronic and catalytic conductive electrode based on metal particles according to claim 1, **characterised in that** the electrolytic deposit is carried out in the presence of:

   - an acid solution of $H_2PtCl_6$;
   - sulphuric acid;
   - $Na_2SO_3$.

3. Method for producing an electronic and catalytic conductive electrode based on metal particles according to either claim 1 or claim 2, **characterised in that** the operation for cleaning the blocking chemical species is carried out by means of oxidation of the species.

4. Method for producing a catalytic conductive electrode based on metal particles according to claim 3, **characterised in that** the oxidation step is carried out by means of application of a sufficiently high potential greater than approximately 0.76 $V_{ERH}$.

5. Method for producing an electronic and catalytic conductive electrode according to claim 4, **characterised in that** the oxidation step is carried out by means of voltammetry scanning in an acid solution.

6. Method for producing a catalytic conductive electrode based on metal particles according to claim 3, **characterised in that** the oxidation step is carried out by means of thermal processing.

7. Method for producing an electronic and catalytic conductive electrode according to any one of the preceding claims, **characterised in that** the step of electrolytic depositing is carried out on a porous electrode.

8. Method for producing an electronic and catalytic conductive electrode according to claim 7, **characterised in that** it further comprises the deposit of a microporous layer at the surface of the porous electrode.

9. Method for producing an electronic and catalytic conductive electrode according to either claim 7 or claim 8, **characterised in that** it comprises the production of a hydrophilic surface in the region of the electrode, prior to the electrolytic deposit.

10. Method for producing an electronic and catalytic conductive electrode according to claim 9, **characterised in that** the surface is made hydrophilic by depositing an ink based on carbon black and alcohol.

**FIG.1**

**FIG.2a**  **FIG.2b**  **FIG.2c**  **FIG.2d**

FIG.3

FIG.4

FIG.5

FIG.6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5084144 A, Vilimbi N.R.K., Anderson E.B., and Taylor E.J.

**Littérature non-brevet citée dans la description**

- **E. J. TAYLOR ; E. B. ANDERSON ; N. R. K. VIL-AMBI.** *Journal of the Electrochemical Society,* 1992, vol. 139, L45-L46
- **S. M. AYYADURAI ; Y. S. CHOI ; P. GANESAN ; S. P. KUMARAGURU ; B. N. POPOV.** *Journal of the Electrochemical Society,* 2007, vol. 154, B1063-B1073
- **H. KIM ; B. N. POPOV.** *Etectrochemical and Solid State Letters,* 2004, vol. 7, A71-A74
- **AYYADURAI, Y. ; S. CHOI ; P. GANESAN ; S. P. KUMARAGURU ; B. N. POPOV.** *Journal of the Electrochemical Society,* 2007, vol. 154, B1063-B1073
- **W. ZHU ; D. KU ; J. P. ZHENG ; Z. LIANG ; B. WANG ; C. ZHANG ; S. WALSH ; G. AU ; E. J. PLICHTA.** *Electrochimica Acta,* 2010, vol. 55, 2555-2560
- **JEAN ST-PIERRE ; NENGYOU JIA ; REZA RAHM-ANI.** *Journal of The Electrochemical Society,* 2008, vol. 155 (4), B315-B32

- **R. MOHTADI ; W.-K. LEE ; S. COWAN ; J. W. VAN ZEE ; MAHESH MURTHY.** *Etectrochemical and Solid-State Letters,* 2003, vol. 6 (12), A272-A274
- **YANNICK GARSANY et al.** Impact of Sulfur Dioxide on the Performance of the PEMFC Cathodes. *ECS Transactions,* 2006, vol. 3 (1), 685-694
- **JEREMY J. PIETRON et al.** Impact of sulfur dioxide on the performance of PEMFC cathode. *ECS Transactions,* 2006, vol. 1 (8), 103-109
- **J. FU et al.** *Journal of Power Sources,* 2009, vol. 187, 32-38
- **R. MOHTADI et al.** *Applied Catalysis B: Environmental,* 2005, vol. 56, 37-42
- **JEAN SAIT-PIERRE et al.** PEMFC Contamination Model: Compétitive Adsorption Demonstrated with NO. *Journal of The Electrochemical Society,* 2008, vol. 155 (4), B315-B320
- **J.M. MOORE et al.** The effects of battlefield contaminants on PEMFC performance. *Journal of Power Sources,* 2000, vol. 85, 254-260